# EUROPEAN PATENT APPLICATION

(11) **EP 4 711 031 A1**
(43) Date of publication of application: **18.03.2026**
(21) Application number: 24200236.8
(22) Date of filing: 13.09.2024
(51) Int. Cl.: B01F 27/07, B01F 27/113, B01F 27/91, B01F 35/00, B23K 31/02, B23K 33/00

(54) **IMPELLER FOR AN AGITATOR SYSTEM, AGITATOR SYSTEM AND METHODS OF FORMING AN IMPELLER FOR AN AGITATOR SYSTEM**

(71) Applicant: Alfa Laval Corporate AB, 221 00 Lund (SE)
(72) Inventor: LAURITSEN, Mikael, DK-8723 LØSNING (DK); THORØE-BJERRISGAARD, Søren, DK-6580 VAMDRUP (DK)
(74) Representative: Alfa Laval Attorneys

(57) **Abstract**

The present invention relates to an impeller (100, 200) for an agitator system (10), comprising a rotary hub (102, 202) and two or more impeller blades (104, 204). Each impeller blade (104, 204) comprises an inner blade section (104a, 204a) of a non-uniform material thickness (T) connected to the rotary hub (102, 202) and an outer blade section (104b, 204b) of sheet metal. The outer blade section (104b, 204b) is attached to the inner blade section (104a, 204a) by being welded edge-to-edge. An agitator system (10) comprising an impeller (100, 200) and methods of forming an impeller (100, 200) for an agitator system (10) are also provided.

## Description

### Technical Field

The invention relates to the field of agitators. More particularly, it is related to an impeller for an agitator system, an agitator system for mixing a liquid product comprising such an impeller, and methods of forming an impeller for an agitator system.

The impeller has a rotary hub and two or more impeller blades.

### Background Art

Agitators are used in numerous applications. In, for example, the food industry, the pharma industry, and the chemical industry, mixing tanks including agitators are used in various processing operations where a product or similar held in a mixing tank is to be mixed, blended, or agitated. Agitators are commonly used where two or more constituents are to be mixed or blended. Further, agitators are commonly used for preventing solids or particles dispersed in a liquid from floating to the surface or from sinking to the bottom.

One type of common agitator includes a rotatable shaft which is provided with one or more impellers or agitator blades used to agitate a product held in a tank.

A common type of impeller is formed by welding blades to a hub. In such a design, a number of impeller blades are welded to a peripheral surface of the hub thereby forming the impeller. In order to withstand the forces that the impeller blades are subjected to during use and throughout its lifetime, the impeller blades must be designed such that any portion of the blades can cope with the forces that the blade portion is subjected to during use. This results in that the blades typically are designed with a thickness that can cope with the forces closest to the hub i.e. where the forces are greatest. In other words, the blades are typically made thick throughout their length or else the blades will risk becoming too weak closer to the hub. Such thick blades increases the drag and thus the overall power consumption of the agitator as well as resulting in that large amounts of material are used. It has however been suggested to machine the impeller blades in areas father away from the hub, to reduce the drag. However, such machining is not only time consuming but also expensive. Further, the material that has been machined away will have to be reused or else the amount of material used will still be high.

Further, when blades are welded onto the hub, the hub is typically subjected to high temperatures which risk deforming the hub. If the hub is deformed during welding, at least an area at the interface between the hub and the blades typically will have to be machined to ensure that the impeller is balanced or else there is an outspoken risk of undesired vibrations or wobbling of the impeller during use. Moreover, connection holes or similar in the hub may have to be rebored or rethreaded if the hub is deformed during welding of the blades. Another problem often encountered when welding impeller blades to a hub is that it is troublesome to reach the welding site with the welding tools used. As a result, only some welding techniques are typically available. Yet another problem often encountered is that it is troublesome to access the welding area for post processing, such as machining or milling, aiming at removing irregularities caused by the welding. Yet another problem is that excessive amounts of welding material commonly will have to be used to enable postprocessing with a desired result. For instance, if the impeller is to adhere to a hygienic standard or medical standard, the interface between the hub and the impeller blades must fulfill certain criteria. One such typical criteria is that a minimum radius at any transition point between the hub and the blades must not fall below a predetermined value dictated by the standard. This means in practice that an oversized weld will have to be formed and subsequently machined to a desired shape. In this way valuable material is typically removed and wasted in order to e.g. eliminate welding errors and meet surface requirements. When using an oversized weld excessive amounts of heat are typically generated. Such excessive amounts of heat risk forming heat zones with reduced stress resistance in the material.

Even though currently available impellers for agitator systems provide high efficiency in terms of mixing, blending or agitating, there is room for improvement when it comes to forming impellers for agitator systems.

### Summary

With the above in mind, it is an objective of the present invention to provide an improved impeller for an agitator system as well as an improved agitator system including such an impeller.

Another objective is to provide improved methods of forming such an impeller.

Another objective is to provide such an impeller in which forces or loads are distributed throughout the impeller in an efficient manner.

Another objective is to provide such an impeller which has a reduced drag.

Another objective is to provide such an impeller which requires less material during fabrication.

Another objective is to provide such an impeller which is easier to manufacture.

Another objective is to provide such an impeller which requires fewer manufacturing steps.

Another objective is to provide such an impeller which is easier to postprocess.

Another objective is to provide such an impeller which requires less postprocessing.

Another objective is to provide such an impeller which is more cost-effective.

To achieve at least one of the above objects and also other objects that will be evident from the following description, an impeller for an agitator system, having the features defined in claim 1 is provided according to the present inventive concept. An agitator system for mixing a liquid product held in a vessel, comprising such an impeller is provided according to claim 10. Methods of forming an impeller for an agitator system are provided according to claims 11 and 14.

More specifically, according to a first aspect, there is provided an impeller for an agitator system, comprising:
a rotary hub, and
two or more impeller blades, each impeller blade comprising,
   an inner blade section of a non-uniform material thickness connected to the rotary hub, and
   an outer blade section of sheet metal,
   wherein the outer blade section is attached to the inner blade section by being welded edge-to-edge.

Hereby an improved impeller for an agitator system is provided.

The impeller is designed for and hence suitable for being used in an agitator system for mixing a liquid product held in a vessel. Thus, the impeller is designed for and hence suitable for being attached to a rotary shaft of an agitator system.

The impeller comprises a rotary hub. The rotary hub is typically configured to be attached to a rotary shaft of an agitator system directly or indirectly via e.g. a spacer or similar. The size and/or shape of the rotary hub may be adapted to the size and the shape of the rotary shaft to which it is configured to be attached. To this end, the rotary hub may typically have a central aperture or opening configured to receive a rotary shaft of a certain size and shape. The rotary hub may be configured to receive a rotary shaft of a circular cross-section. However, the rotary shaft may be configured to receive a rotary shaft having an arbitrary cross-section, such as a square, a rectangular, a triangular, an oblong, or an elliptical cross-section to give a few non-limiting examples.

The impeller comprises two or more impeller blades. Thus, the impeller may have two, three, four, five, six or even ten impeller blades to give a few non-limiting examples. The impeller blades are typically distributed evenly about the circumference of the rotary hub. In this way, the impeller may be balanced such that vibrations and/or wobbling may be counteracted when the impeller is used and hence rotated. The impeller blades of the impeller are generally of equal size and design. However, an impeller may comprise impeller blades of different designs and/or sizes. In such cases, impeller blades of a certain design and/or size are typically distributed evenly about the circumference of the rotary hub. As an example, an impeller may have two impeller blades of a first design and two impeller blades of a second design. In such case, the impeller blades of certain design are typically mounted on opposite sides of the rotary hub so as to form a balanced impeller.

Each impeller blade comprises an inner blade section of a non-uniform material thickness connected to the rotary hub, and an outer blade section of sheet metal. The outer blade section is attached to the inner blade section by being welded edge-to-edge.

It should be noted that within the context of this application the term "welded edge-to-edge" may mean any type of weld in which an edge portion of the outer blade section is welded to an edge portion of the inner blade section in a non-overlapping fashion. Thus, the term welded edge-to-edge encompasses any welding methods as long as an edge portion of the outer blade section is welded to an edge portion of the inner blade section in a non-overlapping fashion.

Thus, an edge portion of the outer blade section may welded to an edge portion of the inner blade section by a butt weld, a butt-to-butt weld, a square-groove weld, a V-groove weld, a double V-groove weld, a bevel-groove weld, a double bevel groove weld, a J-groove weld, a double J-groove weld, an U-groove weld, a double U-groove weld, a flare-groove weld, a Y-butt weld to give a few non-limiting examples. Thus, an edge of the inner blade section and/or an edge of the outer blade section may be chamfered at the interface between the inner blade section and the outer blade section, such that a groove for receiving welding material is formed at the interface prior to welding.

Further, any suitable welding processes may be used. Thus, an edge portion of the outer blade section may be welded to an edge portion of the inner blade section by gas tungsten arc welding (TIG), gas metal arc welding (MIG), laser welding, shielded metal arc welding, metal active gas welding (MAG) or friction welding to give a few non-limiting examples.

By the inner blade section having a non-uniform material thickness, the inner blade section may be designed such that the material of the inner blade section is provided where most needed in terms of force distribution or load distribution. Thus, the inner blade section may be designed in a way where the material thickness is greater in areas subjected to more load as compared to areas subjected to less load. It is however to be understood that the material thickness of the inner blade section may vary in any suitable manner. Further, in this way the internal stress of the inner blade section may be reduced. Furthermore, in this way the less material may be wasted when forming the impeller.

The inner blade section may be connected to the rotary hub in any suitable manner.

By an outer blade section of sheet metal, the outer blade section may be formed in a simplified manner while using a limited amount of material. The outer blade section may be formed from the sheet metal being cut to shape. The outer blade section may be comprised of sheet metal. The outer blade section is typically bent to a curved shape. In this way, the outer blade section may be bent such that the impeller exhibits a desired pitch.

By an outer blade section of sheet metal, the outer blade section may have a uniform material thickness over the outer blade section.

By an outer blade section of sheet metal, the outer blade section may have a uniform material thickness over a major portion of a surface area of the outer blade section. However, the outer blade section may be thinned in certain areas such as close to its outer end. An edge or edges of the outer blade section may be chamfered or thinned. A leading edge of the outer blade section may be chamfered or thinned. A trailing edge of the outer blade section may be chamfered or thinned.

By the outer blade section being attached to the inner blade section by being welded edge-to-edge, a seamless transition or substantially seamless between the inner blade section and the outer blade section may be achieved. This is in contrast to welding techniques in which the materials being welded to each other overlap at the location of the weld. Thus, by the outer blade section being attached to the inner blade section by being welded edge-to-edge, a reduced amount of material may be used while at the same time reducing the drag of the impeller.

By the outer blade section being attached to the inner blade section by being welded edge-to-edge, the welding location may be located at a distance from the rotary hub, or the welding may be made prior to connecting the inner blade section to the rotary hub. In this way, the rotary hub may be subject to less heat during the welding process as opposed to in state-of-the-art impellers where the impeller blades typically are welded directly onto the rotary hub. This allows for a reduced risk of deforming or negatively affecting the rotary hub during welding. Thus, as an example, the need of reboring or retreading an aperture of the rotary hub may be eliminated.

By the outer blade section being attached to the inner blade section by being welded edge-to-edge, the welding location may be located at a distance from the rotary hub, or the welding may be made prior to connecting the inner blade section to the rotary hub. In this way, postprocessing, such as grinding at the welding location may be simplified since the grinding location may be more accessible for e.g. a grinding tool. Further, by welding the outer blade section to the inner blade section edge-to-edge processing of the welding location may be made easier as compared e.g. a filet weld.

By the outer blade section being attached to the inner blade section by being welded edge-to-edge, one type or design of the inner blade section may be used with outer blade sections of different designs. This further allows for that on type of rotary hub with inner blade sections attached thereto may be used with outer blade sections of different designs. Thus, impellers of different designs and/or sizes may be formed with a limited number of elements or parts.

To sum up, significant advantages are achieved by the highly expedient features of the impeller as have been described above. Thus, the synergistic interplay between the features of the impeller enables among other things that the impeller may be formed with a reduced amount of material while still being capable of handling the loads it is subjected to during use, that the impeller may have a reduced drag when being rotated to agitate a liquid product, that the impeller may be formed with a reduced number of fabrication steps, that the impeller may be more cost-effective, that the impeller may be easier to postprocess to give a few examples.

The material thickness of the inner blade section may decrease with an increased radial distance from a rotational axis of the impeller. In this way, the impeller may be designed such that the inner blade section is thickest and hence strongest where subjected to the greatest load. At the same time the inner blade section may be made thinner where subjected to smaller loads, for instance resulting in that less material is needed and that the drag of the impeller may be reduced.

The material thickness of the inner blade section may decrease as a function of the radial distance from the rotational axis of the impeller and hence from the rotary hub.

The material thickness of the inner blade section at an interface between the inner blade section and the outer blade section may correspond to a material thickness of the sheet metal, which is advantageous in that a seamless or substantially seamless transition between the inner blade section and the outer blade section may be achieved.

The sheet metal may have a thickness in a range of 1 mm to 15 mm, such as 3 mm to 8 mm.

The sheet metal may have a thickness in a range of 2 mm to 10 mm, such as 3 mm to 6 mm.

The interface between the inner blade section and the outer blade section may be located at a radial distance in a range of 20 mm to 250 mm, such as 25 mm to 55 mm or 120 mm to 220 mm, from the rotational axis of the impeller, which is advantageous in that the interface between the inner blade section and the outer blade section, and hence the welding location, may be located at a distance from the rotational axis of the impeller and hence from the rotary hub.

The interface between the inner blade section and the outer blade section may be located at a radial distance in a range of 25 mm to 55 mm from the rotational axis of the impeller, which is advantageous in that the interface between the inner blade section and the outer blade section, and hence the welding location, may be located at a distance from the rotational axis of the impeller and hence the rotary hub.

The interface between the inner blade section and the outer blade section may be located at a radial distance in a range of 120 mm to 220 mm from the rotational axis of the impeller, which is advantageous in that room may be provided for assembling the impeller for instance at a tank builder's site using less sophisticated tools.

The rotary hub and the two or more impeller blades may be formed of a metal material, such as an alloy steel, a stainless steel, a stainless steel of AISI 316L grade, a nickel-based alloy, aluminum, or an aluminum alloy, which is advantageous in that a strong impeller with desirable corrosion resistance may be achieved.

The rotary hub and the two or more impeller blades may be formed of Hastelloy C276, AISI 904L steel, SAF2205 steel, or SAF2507 steel to give a few non-limiting examples.

The inner blade sections and the rotary hub may be integrally formed. By integrally forming the inner blade sections and the rotary hub, the transition between the inner blade sections and the rotary hub may be formed such that no postprocessing or only limited postprocessing is needed. By integrally forming the inner blade sections and the rotary hub, fewer manufacturing steps may be needed to form the impeller.

The rotary hub and the inner blade sections may be formed by machining, forging, or casting, which is advantageous in that the rotary hub and the inner blade sections may be formed accurately by utilizing well-established manufacturing techniques.

Each inner blade section may be connected to the rotary hub by a first connection member of the inner blade section being connected to an associated second connection member of the rotary hub, which is advantageous in that the impeller may be assembled subsequent to forming the rotary hub and the impeller blades. In this way predominantly larger size impellers may be transported in a disassembled state and subsequently assembled at a final location of the impeller. Further, in this way predominantly larger size impellers may be assembled at a tank builder's site. Furthermore, in this way predominantly larger size impellers may be assembled inside a vessel such as a tank with limited access.

The first connection member and the second connection member may be any type of members or features which are configured to be connected to each other to establish a connection therebetween. The first connection member and the second connection member may be any type of members which are configured to be connected to each other to establish a mechanical connection therebetween. Such first and second connection members may for instance include an opening, a shaft section, a pin, a bolt, a thread, a screw, a set screw, a recess, a slot or similar.

The connection between the first connection member of the inner blade section and the second connection member of the rotary hub may be complemented by a weld, which is advantageous in that the connection between each inner blade section and the rotary hub may be made stronger or may be locked. Further, hygienic standards may be adhered to by complementing the connection between the first connection member of the inner blade section and the second connection member of the rotary hub by a weld. In practice, any spaces, irregularities or similar at the connection between the first connection member of the inner blade section and the second connection member of the rotary hub may be over-welded and hence made invisible or hidden.

The inner blade sections may comprise a respective radially inwardly protruding shaft section received in a respective mating opening of the rotary hub, or the rotary hub may comprise, for each impeller blade, a radially outwardly protruding shaft section received in a respective mating opening of the inner blade sections, which is advantageous in that the inner blade sections, and hence the impeller blades, may be connected to the rotary hub in a firm manner. This also means that inner blade sections, and hence the impeller blades, may be connected to the rotary hub in a firm manner subsequent to being formed.

According to another aspect of the invention, there is provided an agitator system for mixing a liquid product held in a vessel, the agitator system comprising:
a rotary shaft provided with one or more impellers according to the first aspect configured to mix the liquid product, and
a drive unit coupled to the rotary shaft and configured to rotate the rotary shaft.

In general, features of this aspect provide similar advantages as discussed above in relation to the first aspect. Consequently, said advantages will not be repeated in order to avoid undue repetition.

According to another aspect of the invention, there is provided a method of forming an impeller for an agitator system, the method comprising:
forming a rotary hub comprising two or more integrally formed inner blade sections of a non-uniform material thickness,
for each inner blade section, forming an outer blade section of sheet metal, and
attaching the outer blade section to the inner blade section by welding the outer blade section to the inner blade section edge-to-edge, thereby forming an impeller blade for each inner blade section.

In general, features of this aspect provide similar advantages as discussed above in relation to the first aspect. Consequently, said advantages will not be repeated in order to avoid undue repetition.

The act of forming the rotary hub comprising the two or more integrally formed inner blade sections may comprise machining, forging, or casting.

The method may further comprise grinding and/or polishing the impeller blades at least at a location of an interface between the inner blade section and the outer blade section, which is advantageous in that a seamless or substantially seamless transition between the inner blade sections and the outer blade sections may be achieved.

According to another aspect of the invention, there is provided a method of forming an impeller for an agitator system, the method comprising:
forming two or more impeller blades by, for each impeller blade,
   forming an inner blade section of a non-uniform material thickness comprising a first connection member,
   forming an outer blade section of sheet metal, and
   attaching the outer blade section to the inner blade section by a welding the outer blade section to the inner blade section edge-to-edge, and
forming a rotary hub comprising, for each impeller blade, a second connection member configured to be connected to the first connection member.

In general, features of this aspect provide similar advantages as discussed above in relation to the first aspect. Consequently, said advantages will not be repeated in order to avoid undue repetition.

The method may further comprise connecting each impeller blade to the rotary hub by connecting its first connection member to an associated second connection member.

The act of forming the rotary hub may comprise, for each impeller blade, forming a mating opening in the rotary hub,
wherein the act of forming the inner blade sections may comprise forming a respective radially inwardly protruding shaft section, and
wherein the act of connecting each impeller blade to the rotary hub may comprise receiving each inwardly protruding shaft section in a respective mating opening.

The act of forming the rotary hub may comprise, for each impeller blade, forming a radially outwardly protruding shaft section,
wherein the act of forming the inner blade sections may comprise forming a respective mating opening, and
wherein the act of connecting each impeller blade to the rotary hub may comprise receiving each outwardly protruding shaft section in a respective mating opening.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described as such device may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

Thus, throughout this specification, unless the context requires otherwise, the word "comprise" or variations such as "comprises" or "comprising", will be understood to imply the inclusion of a stated integer or group of integers but not the exclusion of any other integer or group of integers.

### Brief Description of the Drawings

The above and other aspects of the present inventive concept will now be described in more detail, with reference to appended figures showing embodiments or variants of the inventive concept. The figures should not be considered limiting, instead, they are used for explaining and understanding.

As illustrated in the figures, the sizes of layers and regions may be exaggerated for illustrative purposes and, thus, are provided to illustrate the general structures of variants. Like reference numerals refer to like elements throughout.
Fig. 1 is a schematic partial cross-sectional view of mixing arrangement having a top mounted agitator system attached to a vessel.
Fig. 2 is a schematic perspective view of an impeller according to an embodiment.
Fig. 3 is an enlarged view of a transition between an inner blade section and an outer blade section of the impeller of Fig. 2.
Fig. 4 a schematic perspective view of a rotary hub with inner blade sections of the impeller of Fig. 2.
Fig. 5 a schematic perspective view of an outer blade section of the impeller of Fig. 2.
Figs. 6A-6C are schematic top views of how outer blade sections of different designs may be attached to rotary hub with integrally formed inner blade sections of the same design.
Fig. 7 is a schematic perspective view of an impeller according to an embodiment.
Fig. 8A is a schematic perspective view of a rotary hub of the impeller of Fig. 7.
Fig. 8B a schematic perspective view of an impeller blade of the impeller of Fig. 7.
Fig. 8C is a schematic perspective view of a variant of rotary hub similar to the rotary hub of Fig. 8A.
Fig. 8D a schematic perspective view of variant of an impeller blade similar to the impeller blade of Fig. 8B.
Fig. 9 is a flow chart of a method of forming an impeller for an agitator system.
Fig. 10 is a flow chart of a method of forming an impeller for an agitator system.

### Detailed Description

The present inventive concept will now be described more fully hereinafter with reference to the accompanying drawings, in which currently preferred variants or embodiments of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

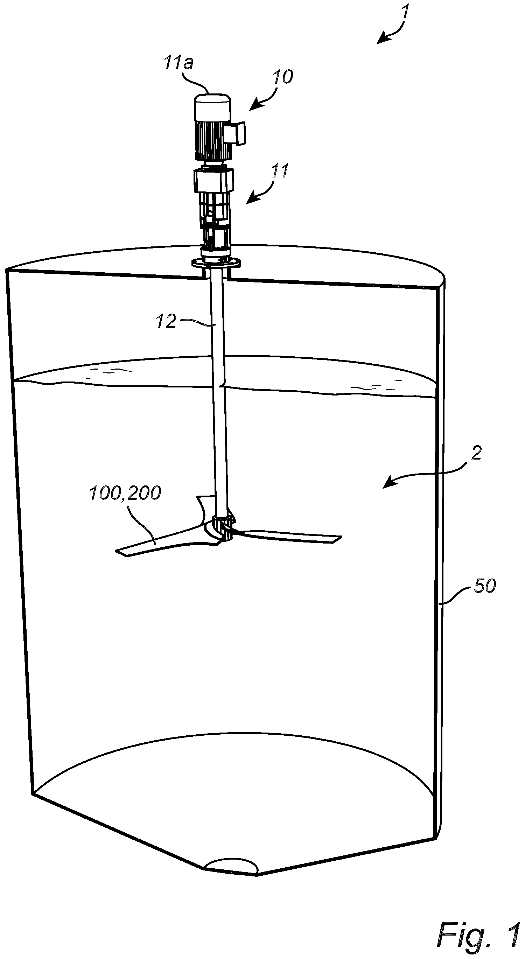

Initially a mixing arrangement 1 will be briefly described with reference to Fig. 1. The mixing arrangement 1 comprises an agitator system 10 and a vessel 50.

Agitator systems 10 is, as known in the art, used to mix, agitate or blend a liquid product 2 or similar held in the vessel 50. Thus, the function of the mixing arrangement 1 and its agitator system 10 will not be described in detail hereinafter. The agitator system 10 has a rotary shaft 12 which extends into the vessel 50, such as a stainless tank or similar, through an opening in the vessel 50.

The rotary shaft 12 of the agitator system 10 is provided with one impeller 100, 200 configured to agitate, mix or blend the product 2 held in the vessel 50.

The agitator system 10 has a drive unit 11 including an electrical motor 11a that transmits the energy required for agitating, mixing, and blending the product 2, either directly or via a gearbox, to the rotary shaft 12 shaft. As the rotary shaft 12 rotates, the impeller 100 is turned. The impeller movement typically creates a high flow of the product 2 with low shear due to a highly effective axial pumping effect on the product 2 in the vessel 50. This results in effective agitating, mixing or blending of the entire contents, i.e. the product 2 of the vessel 50.

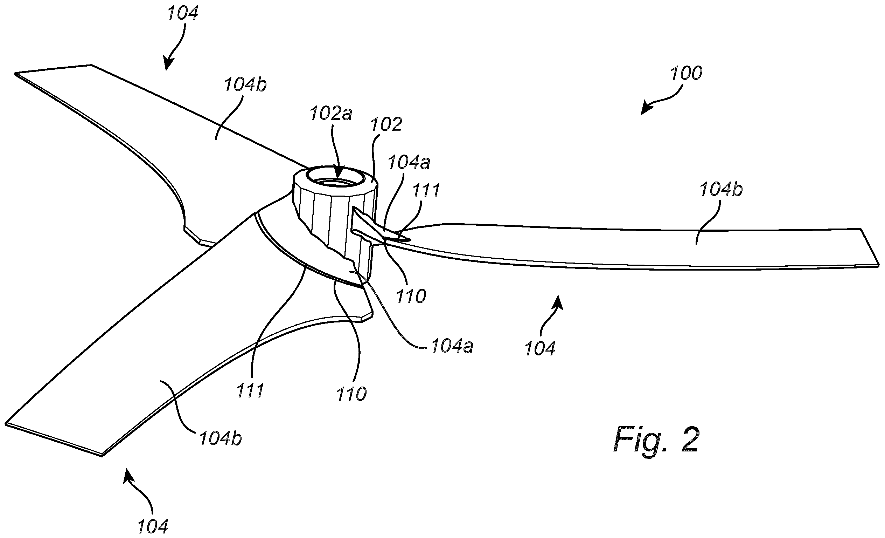

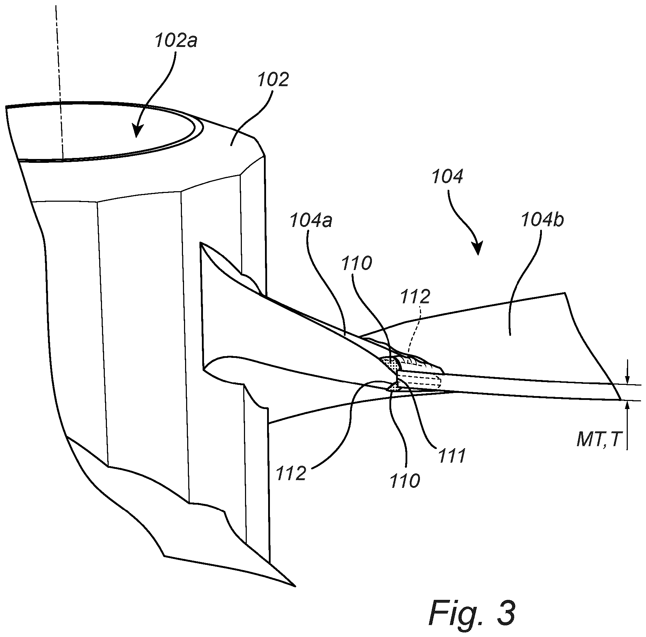

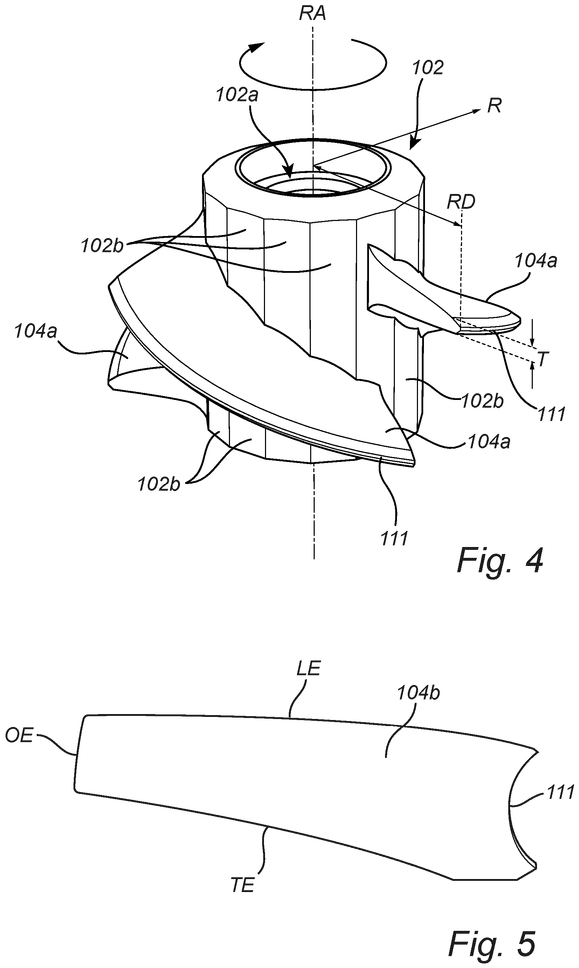

Now turning to Figs. 2-5. Fig. 2 illustrates an impeller 100 according to an embodiment, whereas Fig. 3 illustrates a portion of the impeller 100 of Fig. 2 in enlargement. The impeller 100 comprises a rotary hub 102. The rotary hub 102 of the impeller 100 of Fig. 2 is illustrated in Fig. 4. The impeller 100 comprises three impeller blades 104. Each impeller blade 104 comprises an inner blade section 104a of a non-uniform material thickness T. The inner blade sections 104a are connected to the rotary hub 102. Each impeller blade 104 comprises an outer blade section 104b of sheet metal. An outer blade section 104b of the impeller 100 of Fig. 2 is illustrated in Fig. 5. The outer blade section 104b is attached to the inner blade section 104a by being welded edge-to-edge, as best illustrated in Fig. 3.

In the impeller of Figs. 2 and 3, the inner blade sections 104a and the rotary hub 102 are integrally formed. The inner blade sections 104a and the rotary hub 102 of the depicted impeller 100 are, as best illustrated in Fig. 4, integrally formed by being machined from a piece of material. Alternatively, the inner blade sections 104a and the rotary hub 102 may be integrally formed by forging or casting.

As best illustrated in Fig. 4, the inner blade sections 104a have a non-uniform material thickness T as seen along a radial direction R from a rotational axis RA of the impeller 100. In the depicted impeller 100, the material thickness T of the inner blade sections 104a are greatest closest to the rotary hub 102. Thus, the material thickness T of the inner blade sections 104b decreases with an increased radial distance from the rotational axis RA of the impeller 100. In other words, the material thickness T decreases as the radial distance along a radial direction R increases. In the depicted inner blade section 104a, the material thickness T decreases as a function of the radial distance from the rotational axis RA of the impeller 100.

The rotary hub 102 is formed with a central aperture 102a. The central aperture 102a is configured to receive a rotary shaft 12 of an agitator system 10. The central aperture 102a, may have different sizes and/or shapes to accommodate rotary shafts 12 of different sizes and/or shapes in terms of cross-sectional shapes.

The rotary hub 102 is formed with a number of faces or facets 102b distributed about the circumference of the rotary hub 102. By forming the rotary hub 102 with a number of facets 102b, machining of the rotary hub 102 may be simplified and hence quicker as opposed to if the rotary hub 102 were to be formed with smooth exterior surface (except for the inner blade sections 102a). However, as is to be understood, the exterior of the rotary hub 102 may have any suitable shape. The exterior of the rotary hub 102 may be smooth or may be textured.

The outer blade sections 104b of the impeller of Fig. 2 are formed of sheet metal, as best illustrated in Figs. 3 and 5. The outer blade sections 106b are each formed by being cut from sheet metal and subsequently bent to a desired curved shape, as best illustrated in Figs. 2 and 5. In this way, the impeller 100 may be formed to exhibit a desired pitch. As an alternative, the outer blade sections 104b may be punched to from sheet metal and subsequently bent to a desired curved shape.

Since the outer blade sections 104b are formed of sheet metal in the depicted impeller 100, the outer blade sections 104b each have a uniform material thickness MT over a major portion of a surface area of the outer blade section 104b. In practice, more or less the complete surface area of each outer blade section 104b has a uniform material thickness MT corresponding to the material thickness MT of the sheet metal. However, the outer blade sections 104b are thinned at its edges OE, LE, TE such that the edges become chamfered. In this way, cavitation of the impeller 100 may be counteracted. At the same time, the drag of the impeller 100 may be reduced. It is however to be understood that the outer blade sections 104b may be thinned in any suitable area or areas. The outer blade sections 104b may according to examples be thinned or chamfered at or close to an outer edge OE, a leading edge LE and/or a trailing edge TE.

The outer blade sections 104b of the impeller 100 are attached to a respective inner blade section 104a by being welded edge-to-edge, as best illustrated in Fig. 3. As illustrated in Fig. 3, a more or less seamless transition between the inner blade sections 104a and the outer blade sections 104b are enabled by the outer blade sections 104b of the impeller 100 being attached to a respective inner blade section 104a by being welded edge-to-edge. As illustrated in Figs. 3 and 4, the inner blade sections 104a and the outer blade sections 104b are both chamfered at the location of the weld 110 attaching an outer blade section 104b to an inner blade section 104a. More specifically, the inner blade sections 104a and the outer blade sections 104b are chamfered on both major surfaces, i.e. on a top side and a bottom side. This means that a respective groove 112 is formed on the topside and on the bottom side of each transition between the inner blade sections 104a and the outer blade sections 104b. The respective grooves 112 may thus receive welding material when the outer blade sections 104b of the impeller 100 are attached to a respective inner blade section 104a by being welded edge-to-edge. In this way a strong and durable weld 110 may be formed. Given the depicted design of the outer blade sections 104b and the inner blade section 104a at the location of the weld 110, a double V-groove weld 110 is formed at each transition between the inner blade sections 104a and the outer blade sections 104b.

The impeller blades 104 may be grinded and/or polished at least at a location of an interface 111 between the inner blade section 104a and the outer blade section 104b. In this way a more or less seamless transition between the inner blade sections 104a and the outer blade sections 104b may be achieved.

It is however to be understood that any suitable welding methods may be used for attaching the outer blade sections 104b of the impeller 100 to a respective inner blade section 104a. Such suitable welding methods include a butt weld, a butt-to-butt weld, a square-groove weld, a V-groove weld, a bevel-groove weld, a double bevel groove weld, a J-groove weld, a double J-groove weld, an U-groove weld, a double U-groove weld, a flare-groove weld, a Y-butt weld to give a few non-limiting examples. Similarly, any suitable welding process may be used. Such suitable welding process include gas tungsten arc welding (TIG), gas metal arc welding (MIG), laser welding, shielded metal arc welding, metal active gas welding (MAG) or friction welding to give a few non-limiting examples.

As best illustrated in Fig. 3, the material thickness T of the inner blade section 104a at the interface 111, i.e. at the weld 110, between the inner blade section 104a and the outer blade section 104b may correspond to the material thickness MT of the sheet metal. In this way, a more or less seamless transition between the inner blade sections 104a and the outer blade sections 104b is enabled as clearly illustrated in Fig. 3.

The present inventor have found that the interface 111 between the inner blade section 104a and the outer blade section 104b to advantage may be located at a radial distance RD in a range of 20 mm to 250 mm from the rotational axis RA of the impeller 100 as illustrated in Fig. 4.

It is currently believed that when the interface 111 between the inner blade section 104a and the outer blade section 104b is located at a radial distance RD in a range of 25 mm to 55 mm from the rotational axis RA of the impeller 100, a best balance between material consumption, production time/complexity and thermal impact on the rotary hub 102 is achieved when the rotary hub 102 and the inner blade sections 104a are integrally formed.

The present inventor has found that a high quality high performance impeller 100 may be realized when the rotary hub 102 and the two or more impeller blades 104 are formed of a metal material, such as an alloy steel, a stainless steel, a stainless steel of AISI 316L grade, a nickel-based alloy, aluminum, or an aluminum alloy.

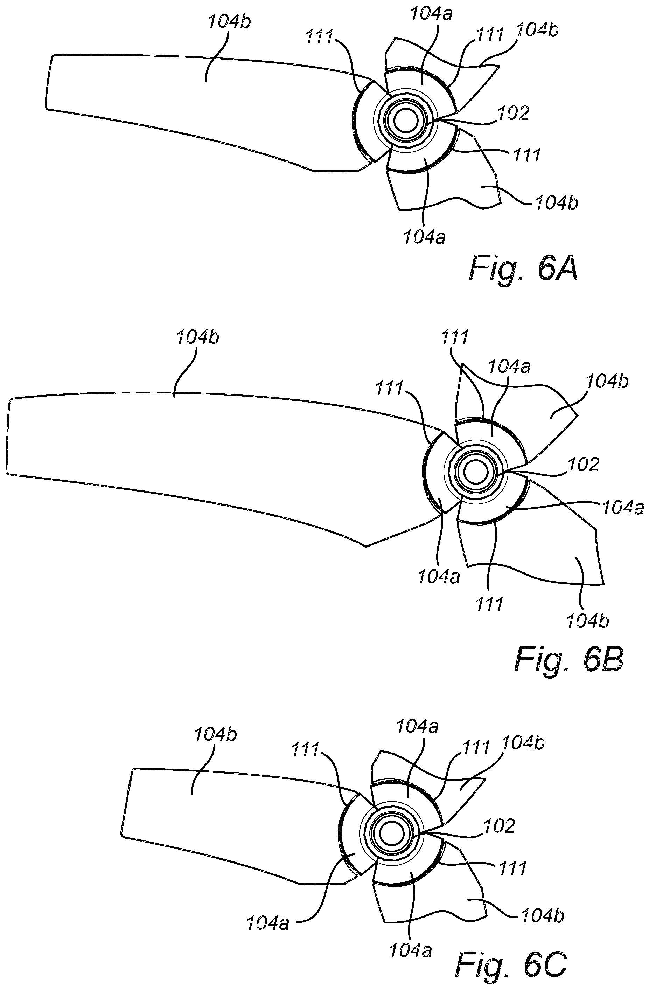

Now turning to Figs. 6A-6C. Figs. 6A-6C schematically illustrates how outer blade sections 104b of different designs may be attached to an inner blade section 104a of the same design.

Fig. 6A is a top view of how impeller of Fig. 2. In Fig 6A, it is illustrated how the outer blade sections 104b of the impeller 100 are attached to a respective inner blade section 104a by being welded edge-to-edge at the interface 111.

In Fig. 6B it is illustrated how outer blade sections 104b of a different design having a larger surface area and a greater length are attached to a respective inner blade section 104a of the same design as in Fig. 6A by being welded edge-to-edge at the interface 111. Thus, the shape of the inner blade section 104a and the outer blade section 104b at the interface 111 of Fig. 6B corresponds to the shape of the inner blade section 104a and the outer blade section 104b at the interface 111 of Fig. 6A. This means that the outer blade sections 104b of Fig. 6B are each attached to a rotary hub 102 and inner blade sections 104a having the same design as in Fig. 6A.

In Fig. 6C it is illustrated how outer blade sections 104b of a different design having a smaller surface area and a shorter length are attached to a respective inner blade section 104a of the same design as in Fig. 6A by being welded edge-to-edge at the interface 111. Thus, the shape of the inner blade section 104a and the outer blade section 104b at the interface 111 of Fig. 6C corresponds to the shape of the inner blade section 104a and the outer blade section 104b at the interface 111 of Fig. 6A. This means that the outer blade sections 104b of Fig. 6C are each attached to a rotary hub 102 and inner blade sections 104a having the same design as in Fig. 6A.

Thus, as clearly illustrated in Figs. 6A-6C, the present inventive concept enables that a plurality of impeller designs may be realized with a limited number of components or parts. More specifically, a plurality of impellers 100 of different designs may be formed from a rotary hub 102 and inner blade sections 104a of a same design by combining the rotary hub 102 and the inner blade sections 104a with outer blade sections 104b of different designs. It is to be understood that also the design of the rotary hub 102 and the inner blade sections 104a may be varied. Thus, a multitude of impellers 100 of different designs may be formed with a limited number of components or parts.

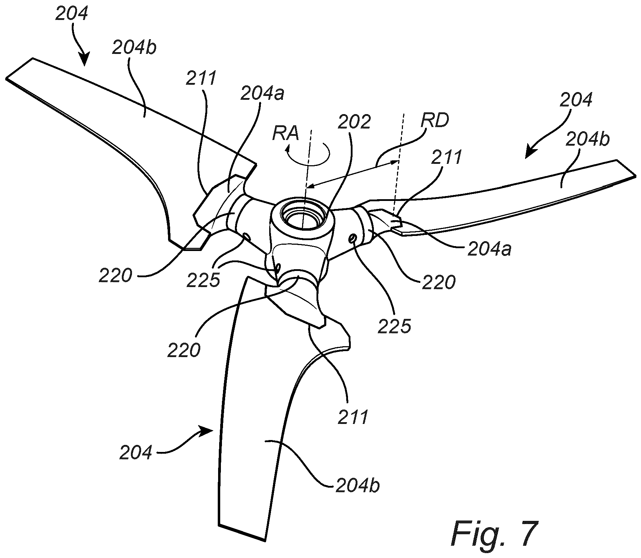

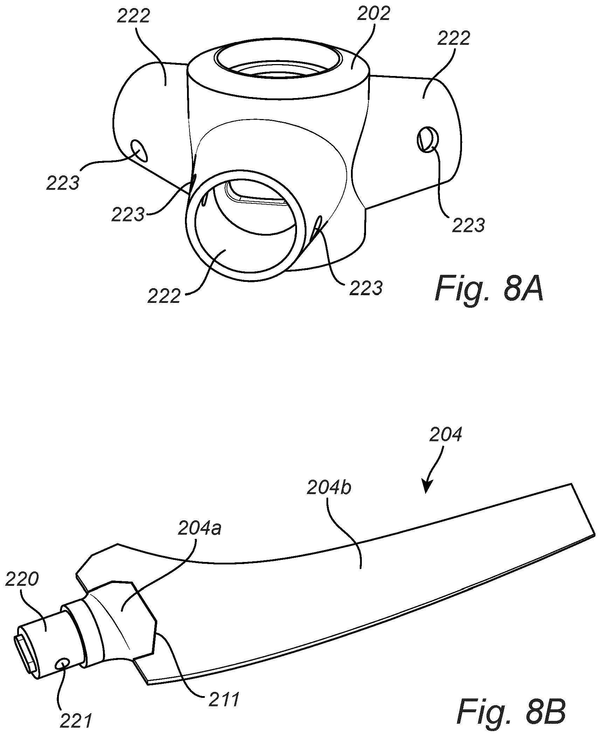

Now turning to Figs. 7, 8A and 8B. Fig 7 illustrates an impeller 200 of a different type. The impeller 200 is similar to the impeller 100. Given the similarities, only relevant differences will be described hereinafter.

The impeller 200 comprises a rotary hub 202. The rotary hub 202 of the impeller 200 of Fig. 7 is illustrated in Fig. 8A. The impeller 200 comprises three impeller blades 204. An impeller blade 204 of the impeller 200 is illustrated in Fig. 8B. Each impeller blade 204 comprises an inner blade section 204a of a non-uniform material thickness. The inner blade sections 204a are connected to the rotary hub 202. Each impeller blade 204 comprises an outer blade section 204b of sheet metal. The outer blade section 204b of each impeller blade 204 is attached to the inner blade section 204a by being welded edge-to-edge.

The impeller blades 204 may be grinded and/or polished at least at a location of an interface 211 between the inner blade section 204a and the outer blade section 204b.

As best illustrated in Fig. 7, each inner blade section 204a is connected to the rotary hub 202 by a first connection member 220 of the inner blade section 204a being connected to an associated second connection member 222 of the rotary hub 202.

In the depicted impeller 200 of Figs. 7, 8A and 8B, each first connection member 220 of the inner blade sections 204a include a radially inwardly protruding shaft section 220, as best illustrated in Fig. 8B. Correspondingly, each second connection member 222 of the rotary hub 202 include a respective mating opening 222. In the depicted impeller 200 of Fig. 7 each radially inwardly protruding shaft section 220 is received in a respective mating opening 222, such that the impeller blades 204 are connected to the rotary hub 202 via the connection of the first connection members 220 of the inner and the second connection members 222.

As best illustrated in Figs. 7, 8A and 8B, the radially inwardly protruding shaft sections 220 and the mating openings 222 may be provided with a respective opening 221, 223 configured to receive a pin 225, a bolt, a screw or similar.

It is to be noted that the first connection members 220 and the second connection members 222 may be formed in any suitable manner. In fact, the first connection member 220 and the second connection member 222 may be any type of members or features which are capable of being connected to each other to establish a connection therebetween. Such first and second connection members 220, 222 may for instance include an opening, a shaft section, a pin, a bolt, a thread, a screw, a set screw, a recess, a slot or similar.

The first connection members 220 and the second connection members 222 may be complemented by a weld (not shown). In this way the connection between each inner blade sections 204a and the rotary hub 202 may be made stronger or may be locked.

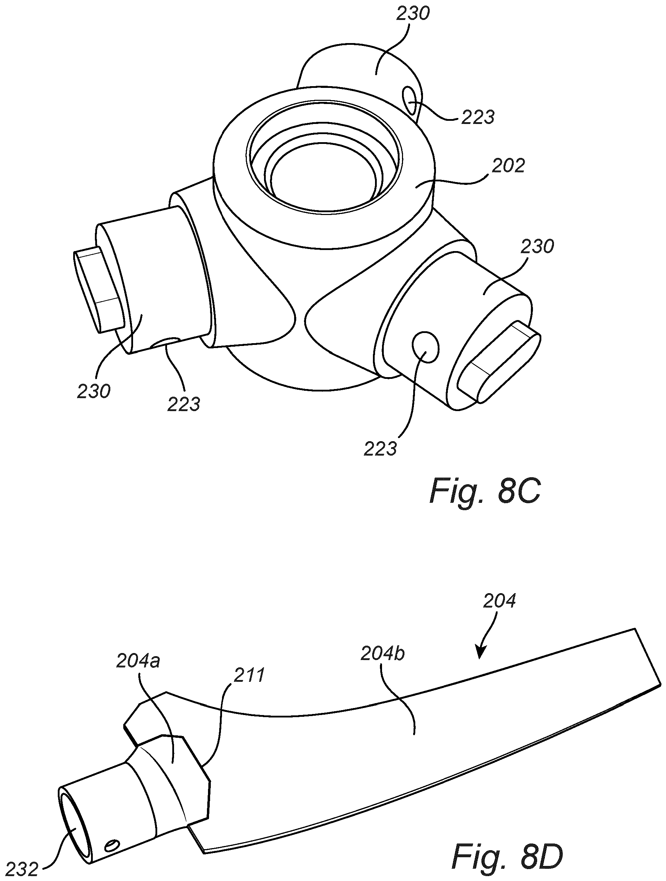

Now turning to Figs. 8C and 8D. Figs. 8C and 8D illustrates a variant design of the first and second connection members 220, 222 of Figs. 7, 8A and 8B. More specifically, the rotary hub 202 of Fig. 8C comprises, for each impeller blade 204, a radially outwardly protruding shaft section 230. The inner blade section 204a of the impeller blade 204 of Fig. 8D comprises a mating opening 232. The depicted radially outwardly protruding shaft section 230 is thus configured to mate with the depicted mating opening 232 to form a connection therebetween. In other words, when an outwardly protruding shaft section 230 mates with an associated mating opening 232, the radially outwardly protruding shaft section 230 is received in the mating opening 232.

The present inventor have found that the interface 211 between the inner blade section 204a and the outer blade section 204b to advantage may be located at a radial distance RD in a range of 20 mm to 250 mm from the rotational axis RA of the impeller 200 as illustrated in Fig. 7.

It is currently believed that when the interface 211 between the inner blade section 204a and the outer blade section 204b of the impeller 200 is located at a radial distance RD in a range of 120 mm to 220 mm from the rotational axis RA of the impeller 200, a best balance between material consumption, production time/complexity and the possibility to post mount the impeller blades 204 to the rotary hub 202 is achieved. Thus, it is currently believed that when the interface 211 between the inner blade section 204a and the outer blade section 204b of the impeller 200 is located at a radial distance RD in a range of 120 mm to 220 mm from the rotational axis RA of the impeller 200, a particularly advantageous impeller 200 which may be assembled in its final location may be achieved.

The present inventor has found that a high quality high performance impeller 200 may be realized when the rotary hub 202 and the two or more impeller blades 204 are formed of a metal material, such as an alloy steel, a stainless steel, a stainless steel of AISI 316L grade, a nickel-based alloy, aluminum, or an aluminum alloy.

Correspondingly to what has been illustrated in Figs. 6A-6C, a plurality of impeller designs of the type illustrated in Figs. 7 and 8A-8D may be realized with a limited number of components or parts. More specifically, a plurality of impellers 200 of different designs may be formed from a rotary hub 202 of a same design by combining the rotary hub 202 with impeller blades 104 of different designs. In this regard, any combination of the rotary hub 202 and the impeller blades 204 are enabled as long as the impeller blades 204 may be connected to the rotary hub 202. Thus, any combination of the rotary hub 202 and the impeller blades 204 are enabled as long as the first connection member 220, 230 of the inner blade section 204a is connectable to an associated second connection member 222, 232 of the rotary hub 202. It is to be understood that also the design of the rotary hub 202 may be varied. Thus, a multitude of impellers 200 of different designs may be formed with a limited number of components or parts.

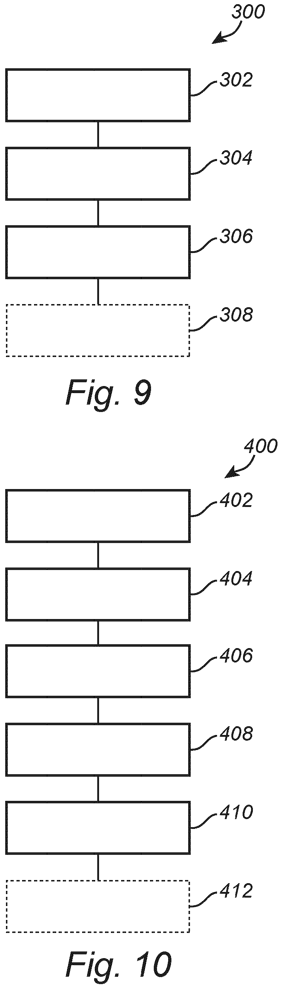

Now turning to Fig. 9. Fig 9 is a flow chart of a method 300 of forming an impeller 100 for an agitator system 10 in which a rotary hub 102 and two or more inner blade sections 104a are integrally formed.

The method 300 comprises forming 302 a rotary hub 102 comprising two or more integrally formed inner blade sections 104a of a non-uniform material thickness T.

The method 300 proceeds by, for each inner blade section 104a, forming 304 an outer blade section 104b of sheet metal, and attaching 306 the outer blade section 104b to the inner blade section 104a by welding the outer blade section 104b to the inner blade section 104a edge-to-edge, thereby forming an impeller blade 104 for each inner blade section 104a.

The act of forming 302 the rotary hub 102 comprising the two or more integrally formed inner blade sections 104a may comprise machining, forging, or casting.

The method 300 may proceed by grinding and/or polishing 308 the impeller blades 104 at least at a location of an interface 111 between the inner blade section 104a and the outer blade section 104b.

Now turning to Fig. 10. Fig 10 is a flow chart of a method 400 of forming an impeller 200 for an agitator system 10 in which the impeller blades 104 of the impeller 200 are connectable to a rotary hub 202 by first and second connection members 220, 230, 222, 232.

The method 400 comprises forming 402 two or more impeller blades 204 by, for each impeller blade 204, forming 404 an inner blade section 204a of a non-uniform material thickness T comprising a first connection member 220, 230, forming 406 an outer blade section 204b of sheet metal, and attaching 408 the outer blade section 204b to the inner blade section 204a by a welding the outer blade section 204b to the inner blade section 204a edge-to-edge.

The method 400 proceeds by forming 410 a rotary hub 202 comprising, for each impeller blade 204, a second connection member 220, 232 configured to be connected to the first connection member 220, 230.

The method 400 may proceed by connecting each impeller blade 204 to the rotary hub 202 by connecting its first connection member 220, 230 to an associated second connection member 222, 232.

It will be appreciated that the present inventive concept is not limited to the variants and examples shown. Several modifications and variations are thus conceivable within the scope of the invention which thus is defined by the appended claims.

## Claims

1. An impeller (100, 200) for an agitator system (10), comprising:
a rotary hub (102, 202), and
two or more impeller blades (104, 204), each impeller blade (104, 204) comprising,
an inner blade section (104a, 204a) of a non-uniform material thickness (T) connected to the rotary hub (102, 202), and
an outer blade section (104b, 204b) of sheet metal,
wherein the outer blade section (104b, 204b) is attached to the inner blade section (104a, 204a) by being welded edge-to-edge.

2. The impeller (100, 200) according to claim 1, wherein the material thickness (T) of the inner blade section (104a, 204a) decreases with an increased radial distance (RD) from a rotational axis (RA) of the impeller (100, 200).

3. The impeller (100, 200) according to claim 1 or 2, wherein the material thickness (T) of the inner blade section (104a, 204a) at an interface (111, 211) between the inner blade section (104a, 2104a) and the outer blade section (104b, 204b) corresponds to a material thickness (MT) of the sheet metal.

4. The impeller (100, 200) according to any one of preceding claims, wherein the interface (111, 211) between the inner blade section (104a, 204a) and the outer blade section (104b, 204b) is located at a radial distance (RD) in a range of 20 mm to 250 mm, such as 25 mm to 55 mm or 120 mm to 220 mm, from the rotational axis (RA) of the impeller (100, 200).

5. The impeller (100, 200) according to any one of the preceding claims, wherein the rotary hub (102, 202) and the two or more impeller blades (104, 204) are formed of a metal material, such as an alloy steel, a stainless steel, a stainless steel of AISI 316L grade, a nickel-based alloy, aluminum, or an aluminum alloy.

6. The impeller (100) according to any one of the preceding claims, wherein the inner blade sections (104a) and the rotary hub (102) are integrally formed.

7. The impeller (100) according to claim 6, wherein the rotary hub (102) and the inner blade sections (104a) are formed by machining, forging, or casting.

8. The impeller (200) according to any one of claims 1-5, wherein each inner blade section (204a) is connected to the rotary hub (202) by a first connection member (220, 230) of the inner blade section (204a) being connected to an associated second connection member (222, 232) of the rotary hub (202).

9. The impeller (200) according to any one of claims 1-5, wherein the inner blade sections (204a) comprise a respective radially inwardly protruding shaft section (220) received in a respective mating opening (222) of the rotary hub (202), or wherein the rotary hub (202) comprises, for each impeller blade (204), a radially outwardly protruding shaft section (230) received in a respective mating opening (232) of the inner blade sections (204a).

10. An agitator system (10) for mixing a liquid product (2) held in a vessel (50), the agitator system (10) comprising:
a rotary shaft (12) provided with one or more impellers (100, 200) according to any one of the preceding claims configured to mix the liquid product (2), and
a drive unit (11) coupled to the rotary shaft (12) and configured to rotate the rotary shaft (12).

11. A method (300) of forming an impeller (100) for an agitator system (10), the method (300) comprising:
forming (302) a rotary hub (102) comprising two or more integrally formed inner blade sections (104a) of a non-uniform material thickness (T),
for each inner blade section (104a), forming (304) an outer blade section (104b) of sheet metal, and
attaching (306) the outer blade section (104b) to the inner blade section (104a) by welding the outer blade section (104b) to the inner blade section (104a) edge-to-edge, thereby forming an impeller blade (104) for each inner blade section (104a).

12. The method (300) of claim 11, wherein the act of forming (302) the rotary hub (102) comprising the two or more integrally formed inner blade sections (104a) comprises machining, forging, or casting.

13. The method (300) according to claim 11 or 12, further comprising grinding and/or polishing (308) the impeller blades (104) at least at a location of an interface (111) between the inner blade section (104a) and the outer blade section (104b).

14. A method (400) of forming an impeller (200) for an agitator system (10), the method (400) comprising:
forming (402) two or more impeller blades (204) by, for each impeller blade (204),
forming (404) an inner blade section (204a) of a non-uniform material thickness (T) comprising a first connection member (220, 230),
forming (406) an outer blade section (204b) of sheet metal, and
attaching (408) the outer blade section (204b) to the inner blade section (204a) by a welding the outer blade section (204b) to the inner blade section (204a) edge-to-edge, and
forming (410) a rotary hub (202) comprising, for each impeller blade (204), a second connection member (220, 232) configured to be connected to the first connection member (220, 230).

15. The method (400) according to claim 14, further comprising:
connecting (412) each impeller blade (204) to the rotary hub (202) by connecting its first connection member (220, 230) to an associated second connection member (222, 232).
